# EUROPEAN PATENT APPLICATION

(11) **EP 3 187 839 A1**
(43) Date of publication of application: **05.07.2017**
(21) Application number: 15460144.7
(22) Date of filing: 31.12.2015
(51) Int. Cl.: G01G 19/04

(54) **STANDARD WEIGHT IN FORM OF RAILWAY CARRIAGE**

(71) Applicant: Elektroniczne Wagi Przemyslowe, 80-281 Gdansk (PL)
(72) Inventor: Wozniak, Mariusz, 80-871 Gdansk (PL); Chechlowski, Adrian, 80-358 Gdansk (PL)
(74) Representative: Czabajski, Jacek

(57) **Abstract**

A standard weight in the form of a railway carriage comprises a body in the form of a platform (1) with stanchions (2), arranged on a chassis in the form of a frame composed of at least two longitudinal beams (3) connected by cross members (4). To the longitudinal beams (3) a front wheel set and a rear wheel set are attached, and on axes (6) with bearings wheels (5) are attached. Between the longitudinal beams (3), to the cross members (4) of the chassis at least one electric drive motor (8) is attached, connected with a bevel gear (10) on the axis (6). The carriage wheels (5) are attached to the axis (6) of the wheel sets by means of dog clutches (9). The dog clutch (9) contains a plate (13) with jaws (14) attached to an axle shaft (12). There are sleeves (17) in the wheel (5), and there are holes (18) for fixing bolts (19) in the dog clutch (9) plate (13) and in the wheel (5). The fixing bolts (19) contain the wheel (5) track retainers (20) in each wheel set. The drive motor (8) output shaft is connected with the bevel gear (10) of the wheel set by means of a gearbox (11).

## Description

The invention relates to a standard weight in the form of a railway carriage which is used in the calibration and verification processes of a railroad track scales. Calibration and verification are processes involving periodic checks of indications of railroad track scales used to weigh carriages.

A railway carriage is weighted loaded on a railroad track scales at least twice and unloaded at least twice, in other procedures a loaded railway carriage is weighted and the tare assigned to the carriage, being the unloaded carriage weight, is subtracted. Railway carriages are weighted in a static mode when a carriage stands on a railroad track scales platform or in a dynamic mode when a carriage drives through a scales platform, where in a dynamic mode the speed at which a carriage drives through a scales platform should not exceed 20 km/h. Dynamic railroad track scales should be verified in a 13 months cycle, and static railroad track scales-usually on a 25 months basis. A railroad track scales contains a platform with a section of tracks, where the platform is supported on cells, usually load cells. The capacity of railroad track scales is usually in the range of up to 120 tonnes. The basic solution in this regard is to load a scales from the outside by placing directly on the track of a railroad track scales subsequent M1 class weights with different nominal weights, usually ranging from 500 kg to 5 tonnes.

Standard weights in the form of railway carriages which are rolled on a scales are also used for this purpose. This type of a standard carriage has precisely determined weight and is usually towed by an engine. Therefore, known carriages which are standard weights do not contain an engine which at specific fuel consumption after each subsequent distance has different total weight. Equipping this kind of carriages with brake assemblies where friction parts of these assemblies by gradual wear change the weight of the entire standard carriage is also avoided. Auxiliary carriages used to obtain particular load of an accompanying standard carriage are known. Auxiliary carriages are usually equipped with winches that make it possible to pull in the predetermined number of weights of known weight on board a standard carriage. In a number of solutions weights are rolled towards and from a winch of a standard carriage along the track, often laid in the form of a ramp. For this purpose, weights are often cylindrical in shape, where outermost parts of a cylinder have a smaller diameter and are spaced from one another by a distance equal to the gauge. However, auxiliary activities, including the movement of weights with considerable weight require a lot of work while posing a risk to occupational safety.

A known solution of a standard weight in the form of an auxiliary test weight car is disclosed in Polish patent specification No. PL 73493. In this known solution a design of an auxiliary carriage for handling a test weight car is proposed. According to this known solution the auxiliary carriage comprises two inner, front and rear gantry structures. On the gantry structures a beam with an I-section with an integrated electric hoist is slidably mounted by means of supports with support rolls. In the front part of an upper flange of said beam a toothed bar meshing with a gear by a ratchet or chain mechanism is mounted. To the rear gantry structure a bracket with a pressure roll is fixed which balances the beam when the beam is loaded and shifted. The shift of the beam outside the carriage is restricted by a lever pawl with a bearing in the front gantry structure and activated by a pull rod. The use in the auxiliary carriage according to this known solution of the beam pulled out of the carriage in connection with mechanical lifting and moving of weights in the place where they are pulled and rolled improves the process of loading and unloading weights on and from the test weight car, where the total weight of the weights can reach 60 tonnes and more. According to this known solution, the test weight car is equipped with the auxiliary carriage containing the beam for carrying the required number of 2.5 tonne weights to and from the test weight car. However, in this known solution there is still a problem with a drive unit which has to roll the set of two carriages to the place of destination, namely the test weight car and the auxiliary carriage on a scales used for calibration and verification of railroad track scales. When the test weight car has been loaded with the required number of weights, the auxiliary carriage must be towed away, and then for the next measurement the auxiliary carriage must be towed and towed away again by a drive unit. All these operations involve the time of the drive unit rolling the test weight car and the auxiliary carriage, which is reflected in the cost of the operations.

According to the solution known from American patent specification No. US 2,955,547, a known railway car truck comprises a frame including two V-shaped extensions. The extensions are inclined upwardly toward the centre of the frame and terminate at the joint of the V in a central vertical axis joint with the other similar extension. Wheel-axle units are carried in bearings at the ends of said frame members and hold the said frame members together for vertical turning movements. The car truck contains its own motors being mounted beneath the inclined portions of said extensions and their axes are arranged longitudinally of the truck. The motors during breaking are switched to an operating mode as power generators. A rigid, unitary casing for each motor and its driving connections are located on opposite sides of a central vertical transverse plane so as to be disposed diagonally opposite each other, leaving the other diagonally opposite spaces. Each motor has a resilient suspension. This car truck contains its own drive in the form of electric motors switched in a breaking mode of the car to an operating mode as power generators.

The purpose of the invention is to develop a new design of a standard weight in the form of a railway carriage allowing the improvement of the calibration and verification processes of railway track scales without involving the second auxiliary carriage and the third unit with a drive motor, as well as to enable the carrying out of the calibration and verification processes using the same carriage on railroad track scales with tracks of different gauge widths. A standard carriage can be equipped with coupled subsequent standard carriages which are not self-propelled. Then, this enables the calibration and verification of railroad track scales with a capacity of up to 120 tonnes, due to the fact that such combined weight can be distributed between two or more coupled carriages, which should protect such a carriage unit from exceeding the axle load permissible on tracks.

The solution according to the invention is disclosed in claim 1 and the subsequent claims.

According to the invention, a standard weight in the form of a railway carriage comprises a body in the form of a platform with stanchions, arranged on a chassis in the form of a frame composed of at least two longitudinal beams connected by cross members. To the longitudinal beams a front wheel set and a rear wheel set are attached, and on the wheel set axes with bearings vehicle wheels are attached.

The standard weight according to the invention is characterised in that between the longitudinal beams, to the cross members of the carriage chassis at least one electric drive motor is attached, connected with a bevel gear on the axis of at least one wheel set. The motor is supplied from an external or own power source, through an inverter with a system of the motor start, reversal of the direction of the motor's rotation and the motor braking.

In the solution according to the invention, the carriage wheels are attached to the axis of the wheel sets preferably by means of dog clutches.

The dog clutch in a preferred embodiment contains a plate with jaws attached to an axle shaft, wherein there is a wheel pin in the symmetry axis of the dog clutch, wherein there are sleeves in the wheel, and there are holes for fixing bolts in the dog clutch plate and in the wheel.

The fixing bolts preferably contain wheel track retainers in each wheel set. The retainers may preferably be in the form of fixed or swivel nuts on the bolts.

In a preferred embodiment of the invention, the drive motor output shaft is connected with the bevel gear of the driven wheel set by means of a gearbox.

According to the solution of the invention, a new solution of a standard weight in the form of a self-propelled railway carriage is proposed, capable of covering on its own power supply short distances necessary to manoeuvre within a railroad track scales. With the use of electric motors powered from an external or own power source, changes in the weight of the carriage due to the loss resulting from the combustion of liquid or solid fuel is avoided. At the same time, the carriage is independent of external powered vehicles which significantly reduces the time of calibration and verification of a scales.

The lightweight carriage which can be transported by road on a semi-trailer is proposed which has significantly increased the mobility of this solution by enabling the carriage to be transported directly to a scales. Proposing a variable wheel track in the wheel sets makes it possible to use the carriage for the calibration and verification of railroad track scales with different gauges, in particular with the gauges of 1,435 mm and 1,520 mm. This is important particularly for units which have railroad track scales with two different gauges, where reloading from one type of a track to another type of a track takes place with the simultaneous control of the weight of goods. In such situations indications of scales on both types of tracks must be consistent, and measurement consistency of both scales owing to the solution according to the invention can be ensured with the use of the same standard carriage according to the invention.

The subject of the invention is shown in the accompanying drawing in which the individual figures show:
- Fig. 1: - a side view of the standard weight in the form of the railway carriage.
- Fig. 2: - a view of the carriage chassis with moving elements after removing the floor panel.
- Fig. 3: - a view of the dog clutch.
- Fig. 4: - a view of the carriage wheel moved apart.
- Fig. 5: - a view of the carriage wheel pushed close.

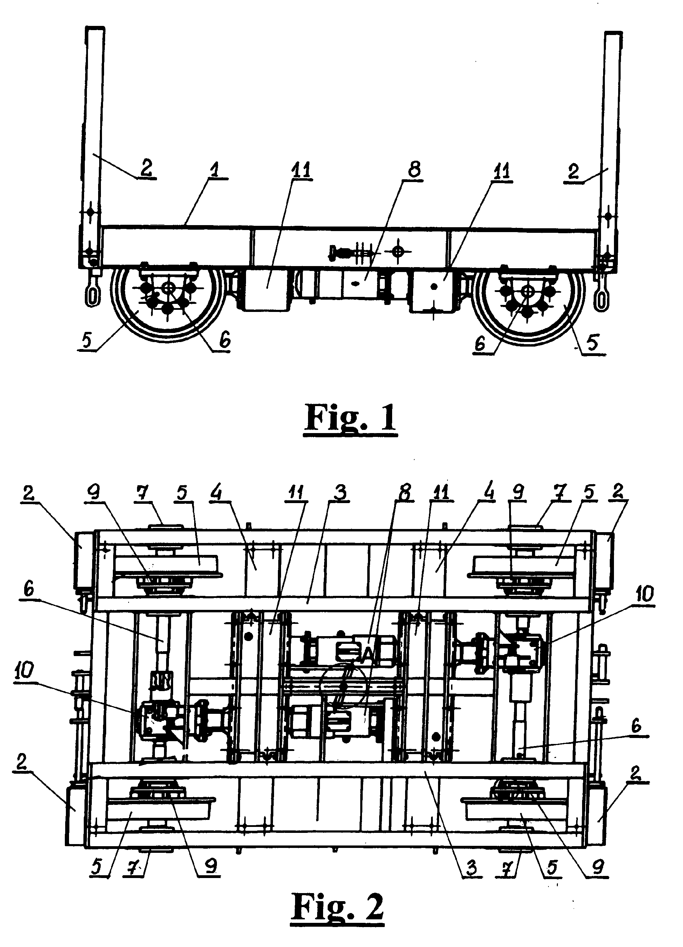

Fig. 1 and Fig. 2 show a standard weight in the form of a railway carriage in the embodiment. Fig. 1 shows a side view of the standard railway carriage, and Fig. 2 shows a top view of the same carriage after removing floor panels. The standard carriage according to this embodiment comprises a body in the form of a loading platform 1 with stanchions 2. The body is arranged and fixed to a chassis in the form of a frame composed of four longitudinal beams 3 connected by cross members 4. To the longitudinal beams 3 and to the cross members 4 a front wheel set and a rear wheel set are attached, where each of the sets contains two vehicle wheels 5, a left wheel and a right wheel, which are mounted on axes 6 by means of bearings 7. Between the longitudinal beams 3 of the frame which is the carriage support frame, to the longitudinal beams 3 and to the cross members 4 in this embodiment two drive motors 8 are attached. The drive motors 8 are electric motors whose drive shafts are connected with gearboxes 11 and further with bevel gears 10 on the axes 6 of both wheel sets. In other embodiments the use of one drive motor 8 with the transmission of power on one axis 6 is not excluded. The electric motors 8 are supplied and controlled from a power supply system through a known inverter circuit. This embodiment provides that in the drive motor 8 control system there is a known unit for electric switching the poles of the drive motor 8 to drive forward and backward, as well as to the starting and breaking modes. The carriage according to this embodiment is equipped with a known friction brake on the drive motor 8 shaft which, however, is only a parking brake used solely to stop the standard carriage according to the invention on the track of a railroad track scales. The drive motor 8 output shaft is connected with the bevel gear 10 of the wheel set by means of the gearbox 11.

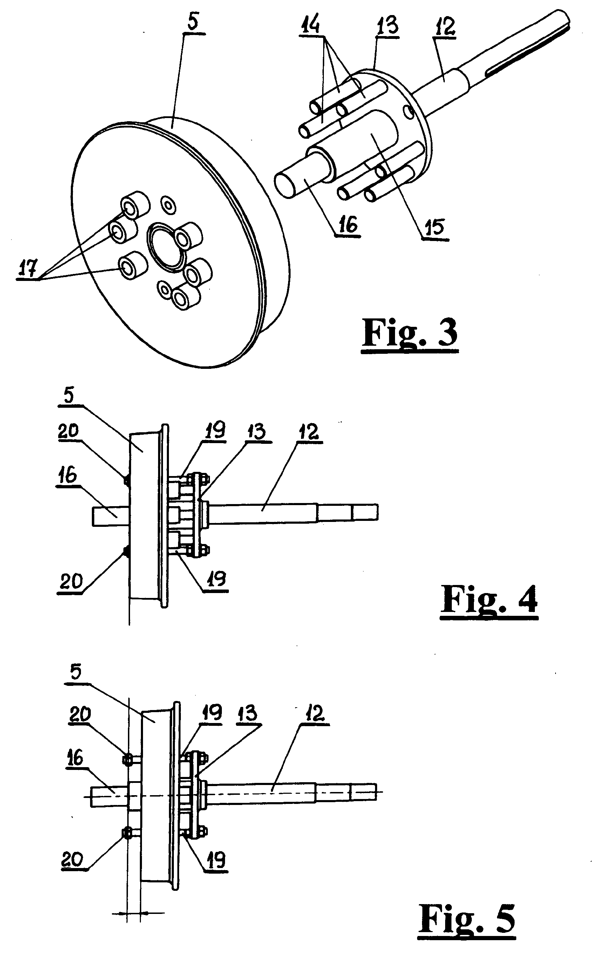

In this embodiment the standard carriage wheels 5 are attached to both axes 6 in the wheel sets by means of dog clutches 9. The dog clutch 9 is presented in the embodiment in Fig. 3, Fig. 4 and Fig. 5. It is shown here that a plate 13 with jaws 14 is attached to an axle shaft 12 of each wheel 5. In the symmetry axis of the dog clutch 9 there is a wheel 5 pin 15. In the wheel 5 there are sleeves 17 working with the jaws 14. In the dog clutch 9 plate 13 and in the wheel 5 in this embodiment there are two holes 18 for fixing bolts 19. The bolts 19 are also spacers adjusting the wheel track in each wheel set.

Fig. 4 shows the adjustment of the position of the wheel 5 for the wheel set to work with a broad-gauge track with a gauge of 1520 mm. On one side of the wheel set the wheel 5 is moved apart from the dog clutch 9 plate 13 at a distance of 42,5 mm on each side. Therefore, the wheel 5 track of the wheel set is widened here by 85 mm.

Fig. 5 shows the adjustment of the position of the wheel 5 for the wheel set to work with a standard-gauge track with a gauge of 1435 mm. As can be seen in the drawing, the wheel 5 plate is pushed close to the dog clutch 9 plate 13.

The adjustment of the position of the wheels 5 to work on standard-gauge or broad-gauge tracks is performed by turning the fixing bolts 19 in threaded holes in the wheel 5 plates and then adjusting their position using retainers 20. In this embodiment a set of counter-nuts as the retainer 20 is used.

With the use of the dog clutches 9 of the described design enabling a change in the wheel track in the standard carriage, as well as in an auxiliary standard carriage, it has become possible to use the same carriage or a set of carriages for calibration and verification of standard-gauge railroad track scales and broad-gauge railroad track scales.

In railway carriages a four-wheeled, two-axle set is usually used on each side of a carriage. One of the reasons is the requirement of not exceeding the permissible axle load on tracks. However, this increases the total weight of a carriage. The purpose of the invention is to reduce the weight and size of a standard carriage to adapt it to road transport on a semi-trailer. This increases logistics capabilities in the transport of a carriage outside railways, using the road network. However, it also limits the possibility of loading a carriage due to the aforementioned regulations on the permissible load capacity of tracks. Therefore, it can be assumed that the biaxial standard carriage according to the invention can ensure the railway track scales load to about 45 tonnes. However, in a number of cases load tests to about 120 tonnes are required.

For this purpose, the use of additional standard carriages coupled with the standard carriage according to the invention but which are not self-propelled is proposed. The drive for rolling such a set of coupled two or more carriages will be provided by the standard carriage according to the invention. At the same time, said carriages due to the relatively small weight and size are suitable for road transport on semi-trailers. This type of a set of standard carriages ensures the load of a railroad track scales with the maximum capacity of 120 tonnes, when it is necessary in a particular case, without exceeding the permissible load of one axis on tracks. Therefore, the solution according to the invention meets at the same time a number of criteria, such as the possibility of road transport on a semi-trailer, the maximum load capacity of a railroad track scales of 120 tonnes while maintaining the permissible load on tracks, as well as its own drive without changing the weight of the whole set as a result of fuel consumption.

### List of designations in the figures

- 1.: Loading platform.
- 2.: Stanchion.
- 3.: Longitudinal beam.
- 4.: Cross member.
- 5.: Wheel.
- 6.: Wheel axis.
- 7.: Wheel bearing.
- 8.: Drive motor.
- 9.: Dog clutch.
- 10.: Bevel gear.
- 11.: Gearbox.
- 12.: Axle shaft.
- 13.: Plate.
- 14.: Jaws.
- 15.: Wheel pin.
- 16.: Wheel bearing pin.
- 17.: Sleeve.
- 18.: Hole for a bolt.
- 19.: Fixing bolt.
- 20.: Retainer.

## Claims

1. A standard weight in the form of a railway carriage comprising a body in the form of a platform with stanchions, arranged on a chassis in the form of a frame composed of at least two longitudinal beams connected by cross members, where to the longitudinal beams a front wheel set and a rear wheel set are attached, and on the wheel set axes with bearings vehicle wheels are attached, **characterised in that** between the longitudinal beams (3), to the cross members (4) of the carriage chassis at least one electric drive motor (8) is attached, connected with a bevel gear (10) on the axis (6) of at least one wheel set and supplied from a power source through an inverter with a system of the motor (8) start, reversal of the direction of the motor's rotation and the motor (8) braking.

2. The standard weight according to claim 1, **characterised in that** the carriage wheels (5) are attached to the axis (6) of the wheel sets by means of dog clutches (9).

3. The standard weight according to claim 2, **characterised in that** the dog clutch (9) contains a plate (13) with jaws (14) attached to an axle shaft (12), wherein there is a wheel (5) pin (15) in the symmetry axis of the dog clutch (9), wherein there are sleeves (17) in the wheel (5), and there are holes (18) for fixing bolts (19) in the dog clutch (9) plate (13) and in the wheel (5).

4. The standard weight according to claim 3, **characterised in that** the fixing bolts (19) contain the wheel (5) track retainers (20) in each wheel set.

5. The standard weight according to one of the claims from 1 to 4, **characterised in that** the drive motor (8) output shaft is connected with the bevel gear (10) of the wheel set by means of a gearbox (11).
